# EUROPÄISCHE PATENTSCHRIFT

(11) **EP 1 078 888 B1**
(45) Veröffentlichungstag und Bekanntmachung des Hinweises auf die Patenterteilung: **02.01.2003**
(21) Anmeldenummer: 00116644.6
(22) Anmeldetag: 02.08.2000
(51) Int. Cl.: C02F 11/12, C02F 11/14

(54) **Vorrichtung zum Eindicken oder Entwässern von Schlämmen, insbesondere von Überschussschlämmen in Kläranlagen**
Device for thickening or dewatering sludge, specially excess sludge from wastewater plants
Dispositif pour épaissir ou déshydrater des boues, en particulier des boues en excès dans les stations d'épuration

(30) Priorität: 21.08.1999 DE 29914677 U
(43) Veröffentlichungstag der Anmeldung: 28.02.2001
(73) Patentinhaber: KÜHN Umweltprodukte GmbH, 29683 Fallingbostel (DE)
(72) Erfinder: Kühn, Horst, 29683 Fallingbostel (DE); Kühn-Steffen, Claudia, Dr., 29683 Fallingbostel (DE)
(74) Vertreter: Patentanwälte Hauck, Graalfs, Wehnert, Döring, Siemons, Schildberg

(56) Entgegenhaltungen:
- DE-A- 2 155 792
- GB-A- 1 063 975
- PATENT ABSTRACTS OF JAPAN vol. 009, no. 180 (C-293), 25. Juli 1985 (1985-07-25) & JP 60 048199 A (KURITA KOGYO KK), 15. März 1985 (1985-03-15)

## Beschreibung

Die Erfindung bezieht sich auf eine Vorrichtung zum Eindicken oder Entwässern von Schlämmen, Sedimenten aus Gewässern oder dergleichen, insbesondere von Überschußschlämmen in Kläranlagen nach dem Anspruch 1 oder 2.

Es ist bekannt, bei der Klärschlammbehandlung eine Eindickung vorzunehmen. Sie stellt die einfachste und kostengünstigste Art der Aufkonzentration von Feststoffen dar und kann sowohl statisch als auch maschinell erfolgen. Bei der statischen Eindickung wird die Schwerkraft ausgenutzt, damit sich Feststoffteilchen mit einer im Vergleich zum Wasser höheren Dichte am Boden eines Absetzbeckens absetzen. Die statische Eindickung kann durch den Zusatz von Flockungshilfsmitteln unterstützt werden, die die Wasserbindungskräfte reduzieren oder aufheben.

Bei der maschinellen Eindickung wird unterschieden zwischen Maschinen, die unter Ausnutzung des natürlichen Schwerefeldes arbeiten, wie Siebreaktoren, Schneckenpressen und Bandeindickern, und Zentrifugen, die zur Fest-/Flüssig-Trennung ein künstliches Schwerefeld erzeugen. Durch eine Eindickung können Suspensionen bis ca. 90 - 95 % des Wassers entzogen werden. Bei noch weitergehendem Wasserentzug spricht man von Entwässerung. Der Übergang zwischen beiden Prozessen ist fließend. Mit zunehmendem Trockengrad steigt der Aufwand für den Entzug des verbliebenen Wassers überproportional an. Entsprechend sind die nach dem Stand der Technik verwendeten Entwässerungsaggregate auf die Verwendung von hohen Drücken oder starken Zentrifugalkräften ausgelegt.

Vorrichtungen zum Eindicken oder Entwässern von Schlämmen, sind aus GB-A-1063975 oder DE-2155799 bekannt.

Bei Eindickungs- oder Entwässerungsaggregaten werden generell Flockungshilfsmittel zugesetzt, wobei es bekannt ist, daß die Trennung verbessert wird, wenn eine auf die Schlammeigenschaften angepaßte Einmischstrecke oder ein Flockungsreaktor der eigentlichen Eindickung vorgeschaltet werden.

In dem Reaktor wird die Verweilzeit so eingestellt, daß eine für den nachgeschalteten Eindickungsprozeß günstigste Flockengröße und mechanische Beanspruchbarkeit der Flocken erreicht wird.

Die bekannten maschinellen Vorrichtungen zur Schlammkonzentration erfordern einen nicht unerheblichen Aufwand an Platz, Technik und Kosten, der oft für kleinere Betriebe oder kleine und mittlere Kläranlagen nicht betrieben werden kann. Hierzu gehört auch der Energieaufwand für deren Betrieb.

Der Erfindung liegt die Aufgabe zugrunde, eine maschinelle Vorrichtung zum Eindicken oder Entwässern von Schlämmen, Sedimenten aus Gewässern oder dergleichen, insbesondere für Überschußschlamm in Kläranlagen zu schaffen, in der eine Förderung des Schlamms mit einer Eindickung oder Entwässerung gekoppelt ist.

Diese Aufgabe wird durch die Merkmale des Anspruchs 1 oder 2, gelöst.

Bei der erfindungsgemäßen Vorrichtung sind eine Exzenterschneckenpumpe und eine Förderschnecke in Reihe geschaltet und auf einer Welle angeordnet. Dem Gehäuse der Förderschnecke ist eine Trennvorrichtung zugeordnet, welche Flüssigkeit vom Schlamm trennt, wobei das Gehäuse der Förderschnecke einen Filtratablauf und einen Ablauf für den konzentrierten Schlamm aufweist. Darüber hinaus ist eine Zuführvorrichtung für Flockungsmittel vorgesehen, die Flockungsmittel dem Ansaugbereich der Exzenterschneckenpumpe und/oder dem Verbindungsbereich zwischen Exzenterschneckenpumpe und der Förderschnecke zuführt.

Der Antrieb der Welle ist am Ende der Förderschnecke angeordnet.

Durch die Zusammenfassung dieser beiden Prozesse Förderung und Eindickung bzw. Entwässerung in einem Arbeitsschritt wird der Aufwand an Platz, Technik und Kosten reduziert.

Exzenterschneckenpumpen, insbesondere auch zur Förderung von Feststoff enthaltenden fließfähigen Medien sind an sich bekannt. Es ist ferner bekannt, eine Förderschnecke einer Exzenterschneckenpumpe vorzuschalten, um der Exzenterschneckenpumpe Schlamm zuzuführen, jedoch gestatten die bekannten Ausführungen keinen generellen oder zusätzlichen Wasserentzug. Bei der Erfindung ist jedoch bei der Ausführungsform, die im folgenden zuerst beschrieben wird, die Reihenfolge beider Fördervorrichtungen umgekehrt. Die Exzenterschneckenpumpe dient zum einen dem Fördern des Dünnschlamms und zum anderen der Durchmischung von Dünnschlamm und Flockungsmittel. Allerdings kann diese Durchmischung auch im Anfangsbereich der Förderschnecke erfolgen. Es ist jedoch auch vorteilhaft, in den Verbindungsbereich zwischen den beiden Fördervorrichtungen Flockungshilfsmittel zuzuführen.

Die Förderschnecke mit der Trennvorrichtung bildet die eigentliche Trennvorkehrung von geflocktem Schlamm und Flüssigkeit.

Die erfindungsgemäße Vorrichtung erfordert wenig Platz, da eine zusätzliche Pumpe eingespart wird. Auch der Energieaufwand ist kleiner, da ein Pumpvorgang entfällt.

Mit der Vorrichtung ist neben der Eindickung auch eine Entwässerung von Suspensionen möglich. Durch die zwangsfördernde Wirkung der Exzenterschneckenpumpe können bei einem entsprechenden Gegendruck hohe Drücke erzeugt werden.

Ein entsprechender Gegendruck kann beispielsweise erzeugt werden durch Ausgestaltungen der Vorrichtung im Hinblick auf Siebkörperkonstruktion, Abtransport des eingedickten/entwässerten Schlamms, Förderleistung sowie Anordnung oder Ausführung der Schneckenwendel.

Eine Anwendung der Erfindung kann auf das Eindicken bzw. Entwässern von Überschußschlämmen, Schwimmschlämmen, Flotatschlämmen, Primärschlämmen, Faulschlämmen oder anderen Suspensionen erfolgen, allgemein überall dort, wo eine Volumenentlastung erwünscht ist.

Als Flockungsmittel können Primärflockungsmittel, wie Metallsalze oder organische Substanzen, verwendet werden sowie anionische und kationische Polyelektrolyte sowie Kombinationen aus Primärflockungsmitteln und Flockungshilfsmitteln. Bei der sogenannten Kombinationsflockung kann die eine Substanz im Ansaugbereich der Exzenterschneckenpumpe und die andere im Verbindungsbereich zwischen den beiden Fördervorrichtungen dosiert zugeführt werden. Eine Vorkonditionierung kann jedoch auch vor der Exzenterschneckenpumpe vorgenommen werden.

Die Trennvorrichtung der erfindungsgemäßen Vorrichtung weist vorzugsweise ein Sieb auf, das z. B. an der Unterseite der Förderschnecke angeordnet und flach oder gebogen ist. Nach einer anderen Ausgestaltung der Erfindung ist das Sieb kreisförmig und im Abstand um die Förderschnecke herum angeordnet. Es kann stationär oder auch rotierend angetrieben sein. Im letzteren Fall ist ein geeigneter Antrieb vorzusehen. Die Drehrichtung kann dabei in der gleichen Drehrichtung wie die der Förderschnecke oder auch entgegengesetzt sein.

Der Ablauf für das Filtrat befindet sich vorzugsweise auf der stromaufwärtigen Seite der Förderschnecke, wobei die Flüssigkeit über ein Gefälle des Bodens des Gehäuses dem Ablauf zugeführt wird.

Der Antrieb für die gemeinsame Welle ist vorzugsweise auf dem abströmseitigen Ende der Förderschnecke angeordnet. Es ist auch eine Anordnung des Antriebs am gegenüberliegenden Ende möglich.

Damit sich die Trennvorrichtung nicht zusetzt, ist nach einer Ausgestaltung der Erfindung eine Spülvorrichtung vorgesehen, die Spülflüssigkeit ständig oder intermittierend auf die Austrittsseite der Trennvorrichtung richtet. Weist die Trennvorrichtung etwa ein kreisförmiges Sieb auf, das rotierend angetrieben ist, kann eine mindestens eine Spüldüse aufweisende Spülleiste verwendet werden, die parallel zur Wellenachse angeordnet ist. Bei einer anderen Ausführungsform kann ebenfalls eine mindestens eine Düse aufweisende Spülleiste vorgesehen werden, die beweglich angetrieben ist zur ständigen oder intermittierenden Spülung der Siebfläche. Die Bewegung der Spülleiste kann mit der Drehung der Förderschnecke gekoppelt sein, entweder mechanisch, indem eine entsprechende getriebemäßige Untersetzung erfolgt oder auch durch eine elektronische Ansteuerung.

Die Düsen der Spülvorrichtung können Rundstrahl- oder Flachstrahldüsen sein, wie sie an sich bekannt sind.

Bei einer alternativen Lösung der erfindungsgemäßen Aufgabe gemäß Patentanspruch 2 sind ebenfalls Exzenterschneckenpumpe und Förderschnecke auf einer Welle angeordnet und gemeinsam angetrieben. Der Klärschlamm, der dem Flockungsmittel zu gemischt ist, wird nun über eine geeignete Zuführung dem zugeordneten Ende der Förderschnecke zugeführt, d. h. dem Ende der Förderschnecke, welche der Exzenterschneckenpumpe abgewandt ist. Im Gehäuse der Förderschnecke ist wiederum eine Trennvorrichtung zur Trennung von Schlamm und Flüssigkeit vorgesehen, und am stromabseitigen Ende der Förderschnecke ist ein Filtratablaß, während der Schlamm über die Exzenterschneckenpumpe ausgetragen wird. Der Antrieb der Welle ist bei dieser Lösung ebenfalls am Ende der Förderschnecke angeordnet.

Eine Exzenterschneckenpumpe ist in der Lage, eine relativ große Förderhöhe bereit zustellen. Umgekehrt besitzt sie nur eine relativ geringe Saughöhe. Es muß vermieden werden, daß der Saugstrom abreißt, da sonst Gefahr besteht, daß die Exzenterschneckenpumpe trocken läuft und dadurch sich selbst zerstört. Bei Anwendungen, in denen eine große Förderhöhe zu überwinden ist, ist daher die zuletzt beschriebene Vorrichtung von Vorteil. Dabei kann es zweckmäßig sein, die Zufuhr des Dünnschlamms über eine geeignete Förderpumpe zu bewerkstelligen. Bei der umgekehrten weiter oben beschriebenen Anordnung kann auf eine gesonderte Förderpumpe vollständig verzichtet werden, wenn eine geringe Saughöhe und eine geringe Förderhöhe vorliegt. Die Vorteile, die in Verbindung mit der ersten beschriebenen Lösung angegeben werden, sind auch bei der zweiten Lösung gleichermaßen vorhanden.

Für den Entwässerungsbetrieb ist ebenfalls die zweite Lösung vorteilhaft, in der die Zufuhr des Dünnschlamms über eine geeignete Förderpumpe erfolgt, vor allem wenn als Dünnschlamm vorkonditionierter oder bereits eingedickter Schlamm verwendet wird.

Die Erfindung wird nachfolgend anhand von in den Zeichnungen dargestellten Ausführungsbeispielen näher erläutert.
- Fig. 1: zeigt im Schnitt schematisch eine Ausführungsform einer Vorrichtung nach der Erfindung.
- Fig. 2: zeigt im Schnitt verschiedene Formen des Siebes für die Vorrichtung nach Fig. 1.
- Fig. 3: zeigt die Ausführungsform einer Spülvorrichtung für ein Sieb der Vorrichtung nach Fig. 1.
- Fig. 4: zeigt eine andere Ausführungsform einer Spülvorrichtung eines Siebes für die Vorrichtung nach Fig. 1.
- Fig. 5: zeigt eine zweite Ausführungsform einer Vorrichtung nach der Erfindung.

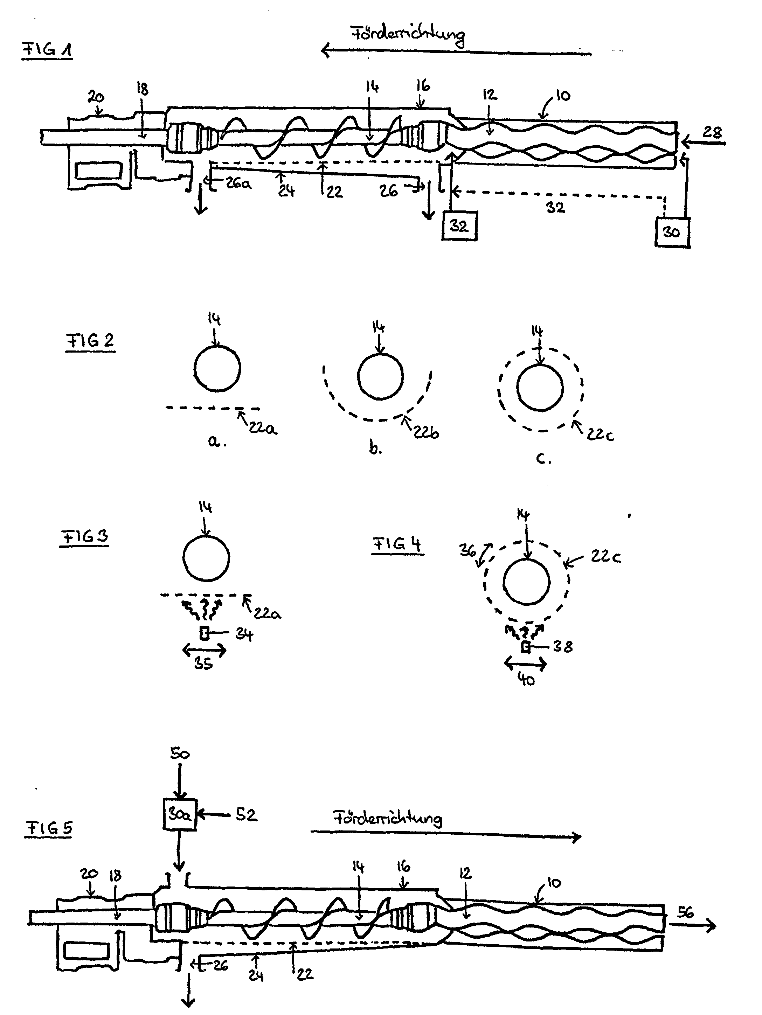

In Fig. 1 ist eine Exzenterschneckenpumpe 10 zu erkennen, die zwei- oder mehrgängig sein kann und an sich bekannt ist. Die Schneckenwelle 12 der Pumpe 10 ist gekoppelt mit einer Förderschnecke 14, die in einem Gehäuse 16 angeordnet ist. Förderschnecke 14 und Exzenterschneckenpumpe 10 sind von einer gemeinsamen Welle 18 angetrieben von einem nicht gezeigten Antriebsmotor. In Fig. 1 ist lediglich eine Lagervorrichtung 20 für die Welle 18 zu erkennen.

In dem Gehäuse 16 ist ein Sieb 22 angeordnet, das gemäß Fig. 2a eben sein kann und sich horizontal erstreckt oder gebogen wie bei Fig. 2b. Bei einer dritten Ausführungsform nach Fig. 2c erstreckt sich das Sieb um die Förderschnecke 14 herum in einem entsprechenden radialen Abstand.

Die Förderschnecke 14 kann aus Metall oder Kunststoff geformt sein, und die Steigung der Wendel kann unterschiedlich gewählt werden je nach der Pumpdrehzahl, welche für die Förderzwecke geeignet ist. Auch die Länge der Förderschnecke 14 ist auf diese Parameter einstellbar zu wählen.

Der Boden 24 des Gehäuses 16 hat in Richtung Exzenterschneckenpumpe 10 ein Gefälle und am Ende einen Ablaß 26 für das Filtrat. Am vorderen Ende der Schnecke 14 ist ein Ablaß 26a für das konzentrierte Medium vorgesehen.

Die verschiedenen gezeigten Siebe können aus einem korrosionsbeständigen Metall oder Kunststoffmaterial bestehen. Die Öffnungen in den Sieben können von Schlitzen, Spalten oder dergleichen gebildet sein, die in Längs- oder in Querrichtung angeordnet sind. Anstelle eines Metall- oder Kunststoffsiebes kann auch ein Metall- oder Kunststoffgewebe oder dergleichen vorgesehen werden.

Dünnschlamm wird gemäß Pfeil 28 dem Ansaugbereich der Exzenterschneckenpumpe 10 zugeführt. In diesem Bereich kann mit Hilfe einer Zuführ- und Mischvorrichtung 30 Flockungsmittel zugeführt werden. Wie durch die gestrichelte Linie 32 angedeutet, kann das Flockungsmittel alternativ oder zusätzlich auch in den Verbindungsbereich zwischen dem Gehäuse der Exzenterschneckenpumpe 10 und dem Gehäuse 16 für die Förderschnecke 14 zugeführt werden. In diesem Bereich kann auch ein Flockungshilfsmittel von einer Zuführvorrichtung 32 zugeführt werden.

Das Sieb 22 ist ständig oder von Zeit zu Zeit zu spülen, damit es sich nicht zusetzt. In den Fig. 3 und 4 sind Möglichkeiten für die Spülung angedeutet. Mit 34 ist eine mindestens eine Spüldüse aufweisende Spülleiste gezeigt, die in Richtung des Doppelpfeils 35 hin und her bewegbar ist, um das Sieb 22a zu spülen. Der hierfür erforderliche Antrieb ist nicht dargestellt. In Fig. 4 ist ein kreisrundes Sieb 22d angedeutet entsprechend Fig. 2c, dessen Antrieb nicht gezeigt ist. Die Rotation kann in beiden Richtungen erfolgen, wie durch Doppelpfeil 36 angedeutet. In diesem Fall kann eine Spülleiste 38 stationär bleiben. Wird hingegen ein stationäres kreisförmiges Sieb verwendet, kann die Spülleiste 38 kreisbogenförmig hin und her bewegt oder auch rotierend angeordnet werden. Die Hin- und Herbewegung ist bei 40 durch Doppelpfeil angedeutet. Auch hier wird die Lagerung und der Antrieb der Spülleiste nicht im einzelnen dargestellt. Auch die Steuervorrichtung für die Bewegung der Spülleisten ist hier nicht gezeigt. Sie kann mit der Drehung der Förderschnecke 14 gekoppelt sein oder auch zeitabhängig arbeiten.

Die bei der Ausführungsform nach Figur 5 gezeigten Bauteile gleichen weitgehend denen nach Figur 1, so daß gleiche Teile mit gleichen Bezugszeichen versehen sind. Die Förderrichtung bei der Ausführungsform nach Figur 5 ist jedoch entgegengesetzt. Aus einem Mischer 30a, dem entsprechend Pfeil 50 Dünnschlamm zugeführt wird und gemäß Pfeil 52 ein Flockungsmittel, wird das Gemisch in das Gehäuse 16 der Förderschnecke oder davor eingetragen. Die Mischung wird mit Hilfe der Schnecke in Figur 5 nach rechts transportiert, wobei Filtrat über die Ablaßöffnung 26 abgelassen werden. Das Konzentrat wird über die Exzenterschneckenpumpe 10 befördert und bei 56 ausgetragen, wobei eine relativ große Höhe überwunden werden kann, beispielsweise zu einem höher gelegenen Stapeltank.

## Patentansprüche

1. Vorrichtung zum Eindicken oder Entwässern von Schlämmen, Sedimenten aus Gewässern oder dergleichen, insbesondere von Überschußschlämmen in Kläranlagen mit folgenden Merkmalen:
- einer zwei- oder mehrgängigen Exzenterschneckenpumpe (10), deren Ansauganschluß Dünnschlamm (28) zugeführt wird,
- einer der Exzenterschneckenpumpe nachgeordneten Förderschnecke (14), die von der gleichen Welle (18) wie die Exzenterschneckenpumpe (10) angetrieben ist und die in ihrem Gehäuse (16) eine Trennvorrichtung für die Trennung von Schlamm und Flüssigkeit aufweist,
- die Trennvorrichtung mit einem Filtratablauf (26) und einem Dickschlammablauf versehen ist, und
- der Filtratablauf auf der stromabseitigen Seite der Trennvorrichtung und der Dickschlammablauf am anderen Ende der Trennvorrichtung bzw. der Förderschnecke (14) vorgesehen ist,
**dadurch gekennzeichnet, daß**
- eine Zuführvorrichtung (30, 32) für Flockungsmittel, in dem Ansaugbereich der Exzenterschneckenpumpe (10) und/oder der Verbindung zwischen der Exzenterschneckenpumpe und der Förderschnecke angeordnet ist, und
- der Antrieb der Welle am Ende der Förderschnecke angeordnet ist.

2. Vorrichtung zum Eindicken oder Entwässern von Schlämmen, Sedimenten aus Gewässern oder dergleichen, insbesondere von Überschußschlämmen in Kläranlagen mit folgenden Merkmalen:
- einer zwei- oder mehrgängigen Exzenterschneckenpumpe (10),
- einer der Exzenterschneckenpumpe vorgeordneten Förderschnecke (14), die von der gleichen Welle (18) wie die Exzenterschneckenpumpe (10) angetrieben ist und die in ihrem Gehäuse (16) eine Trennvorrichtung für die Trennung von Schlamm und Flüssigkeit aufweist,
- die Trennvorrichtung mit einem Filtratablauf (26) und einem Dickschlammablauf versehen ist, und
- der Filtratablauf auf der stromabseitigen Seite der Trennvorrichtung und der Dickschlammablauf am Eingang der Exzenterschneckenpumpe vorgesehen ist,
**dadurch gekennzeichnet, daß**
- eine Zuführvorrichtung (30, 32) für ein Gemisch aus Dünnschlamm und Flockungsmittel in dem Ansaugbereich der Förderschnecke (14) vorgesehen ist, und
- der Antrieb der Welle am Ende der Förderschnecke angeordnet ist.

3. Vorrichtung nach Anspruch 1 oder 2, **dadurch gekennzeichnet, daß** die Trennvorrichtung ein Sieb (22) aufweist, das an der Unterseite der Förderschnecke (14) angeordnet und flach oder gebogen ist.

4. Vorrichtung nach Anspruch 1 oder 2, **dadurch gekennzeichnet, daß** die Trennvorrichtung ein die Förderschnecke (14) kreisförmig umgebendes Sieb (22c, 22d) aufweist.

5. Vorrichtung nach einem der Ansprüche 1 bis 4, **dadurch gekennzeichnet, daß** der Boden (24) des Förderschneckengehäuses (16) in Richtung der Exzenterschneckenpumpe (10) ein Gefälle aufweist, an dessen Ende der Filtratablauf (26) angeordnet ist.

6. Vorrichtung nach einem der Ansprüche 1 bis 5, **dadurch gekennzeichnet, daß** die Zuführvorrichtung (30, 32) einen Rotationsflügelmischer aufweist.

7. Vorrichtung nach einem der Ansprüche 1 bis 6, **dadurch gekennzeichnet, daß** der Trennvorrichtung eine Spülvorrichtung zugeordnet ist, die Spülflüssigkeit auf die Austrittsseite der Trennvorrichtung richtet.

8. Vorrichtung nach Anspruch 4 und 7, **dadurch gekennzeichnet, daß** das im Schnitt kreisförmige Sieb (22d) rotierend angetrieben ist und eine mindestens eine Düse aufweisende Spülleiste (38) parallel zur Wellenachse stationär angeordnet ist.

9. Vorrichtung nach Anspruch 8, **dadurch gekennzeichnet, daß** eine mindestens eine Düse aufweisende Spülleiste (34) bewegbar gelagert und von einem Spülantrieb angetrieben ist zur ständigen oder intermittierenden Spülung der Siebfläche.

10. Vorrichtung nach Anspruch 9, **dadurch gekennzeichnet, daß** die Bewegung der Spülleiste (34, 38) mit der Drehung der Förderschnecke (14) gekoppelt ist.

11. Vorrichtung nach einem der Ansprüche 8bis 10, **dadurch gekennzeichnet, daß** eine Steuervorrichtung für die Spülleiste vorgesehen ist, die die Bewegung der Spülleiste und/oder die Abgabe von Spülflüssigkeit steuert, z. B. zeitabhängig.

12. Vorrichtung nach Anspruch 2, **dadurch gekennzeichnet, daß** die Lageranordnung (54) für die Antriebswelle (18) einen Kanal aufweist, der eine Zuführleitung für ein Gemisch aus Dünnschlamm und Flockungsmittel mit dem zugekehrten Ende der Förderschnecke (14) verbindet.

## Claims

1. A device for thickening or dewatering sludges, sediments from waters or the like, especially excess sludges in waste water purification plants, having the following features:
- a double-lead or multi-lead eccentric screw pump (10) to the suction port of which a thin sludge (28) is supplied,
- a feed screw (14) disposed downstream of the eccentric screw pump that is driven by the same shaft (18) as the eccentric screw pump (10) and has a separating device for separating the sludge and liquid in its casing (16),
- the separating device is provided with a filtrate outlet (26) and a thick-sludge outlet, and
- the filtrate outlet is provided on the flow-end side of the separating device and the thick-sludge outlet is provided at the other end of the separating device or feed screw (14),
**characterized in that**
- a supply device (30, 32) for flocculation aids is disposed in the suction area of the eccentric screw pump (10) and/or the connection between the eccentric screw pump and the feed screw, and
- the drive of the shaft is disposed at the end of the feed screw.

2. A device for thickening or dewatering sludges, sediments from waters or the like, especially excess sludges in waste water purification plants, having the following features:
- a double-lead or multi-lead eccentric screw pump (10),
- a feed screw (14) disposed upstream of the eccentric screw pump that is driven by the same shaft (18) as the eccentric screw pump (10) and has a separating device for separating the sludge and liquid in its casing (16),
- the separating device is provided with a filtrate outlet (26) and a thick-sludge outlet, and
- the filtrate outlet is provided on the downstream side of the separating device and the thick-sludge outlet is provided at the inlet of the eccentric screw pump,
**characterized in that**
- a supply device (30, 32) for a mixture of thin sludge and flocculation aid is disposed in the suction area of the feed screw (14), and
- the drive of the shaft is disposed at the end of the feed screw.

3. The device as claimed in claim 1 or 2, **characterized in that** the separating device has a screen (22) which is disposed at the underside of the feed screw (14) and is flat or curved.

4. The device as claimed in claim 1 or 2, **characterized in that** the separating device has a screen (22c, 22d) which circularly surrounds the feed screw (14).

5. The device as claimed in any one of claims 1 to 4, **characterized in that** the bottom (24) of the feed screw casing (16), in the direction of the eccentric screw pump (10), has a descending gradient at the end of which the filtrate outlet (26) is disposed.

6. The device as claimed in any one of claims 1 to 5, **characterized in that** the supply device (30, 32) has a rotary-vane mixer.

7. The device as claimed in any one of claims 1 to 6, **characterized in that** the separating device has associated therewith a rinsing device which directs a rinsing liquid onto the outlet side of the separating device.

8. The device as claimed in claims 4 and 7, **characterized in that** the screen (22d) which is circular in cross-section is driven by rotation and that a rinsing strip (38) having at least one nozzle is stationarily disposed in parallel with the shaft axis.

9. The device as claimed in claim 8, **characterized in that** a rinsing strip (34) having at least one nozzle is movably supported and is driven by a rinsing drive to rinse the screen surface in a continuous or intermittent manner.

10. The device as claimed in claim 9, **characterized in that** the motion of the rinsing strip (34, 38) is coupled to the rotation of the feed screw (14).

11. The device as claimed in any one of claims 8 to 10, **characterized in that** a control device is provided for the rinsing strip that controls the motion of the rinsing strip and/or the delivery of rinsing liquid, e.g. in dependence on time.

12. The device as claimed in claim 2, **characterized in that** the bearing assembly (54) for the driving shaft (18) has a duct which connects a supply line for a mixture of thin sludge and flocculation aid to the end of the feed screw (14) that faces it.

## Revendications

1. Dispositif d'épaississement ou de dessèchement de boues, sédiments d'eaux ou analogues, en particulier de boues en excès dans des stations d'épuration, présentant les caractéristiques suivantes :
- une pompe à vis excentrique à deux ou plusieurs filets (10), au branchement d'aspiration de laquelle est amenée de la boue claire (28),
- une vis sans fin (14) placée en aval de la pompe à vis excentrique, qui est entraînée par le même arbre (18) que la pompe à vis excentrique (10) et qui comporte dans son carter (16) un dispositif de séparation pour la séparation de la boue et du liquide,
- le dispositif de séparation est pourvu d'une sortie d'écoulement de filtrat (26) et d'une sortie d'écoulement de boue épaisse, et
- la sortie d'écoulement de filtrat est prévue du côté amont du dispositif de séparation et la sortie d'écoulement de boue épaisse est prévue à l'autre extrémité du dispositif de séparation ou de la vis sans fin (14),
**caractérisé en ce que**
- un dispositif d'amenée (30, 32) pour des floculants, est placé dans la zone d'aspiration de la pompe à vis excentrique (10) et/ou de la liaison entre la pompe à vis et la vis sans fin, et
- le moteur d'entraînement de l'arbre est placé à l'extrémité de la vis sans fin.

2. Dispositif d'épaississement ou de dessèchement de boues, sédiments d'eaux ou analogues, en particulier de boues en excès dans des stations d'épuration, présentant les caractéristiques suivantes :
- une pompe à vis excentrique à deux ou plusieurs filets (10),
- une vis sans fin (14) placée en amont de la pompe à vis excentrique, qui est entraînée par le même arbre (18) que la pompe à vis excentrique (10) et qui comporte dans son carter (16) un dispositif de séparation pour la séparation de la boue et du liquide,
- le dispositif de séparation est pourvu d'une sortie d'écoulement de filtrat (26) et d'une sortie d'écoulement de boue épaisse, et
- la sortie d'écoulement de filtrat est prévue du côté aval du dispositif de séparation et la sortie d'écoulement de boue épaisse est prévue à l'entrée de la pompe à vis excentrique,
**caractérisé en ce que**
- un dispositif d'amenée (30, 32) pour un mélange de boue claire et de floculants est prévu dans la zone d'aspiration de la vis sans fin (14) et
- l'entraînement de l'arbre est placé à l'extrémité de la vis sans fin.

3. Dispositif selon la revendication 1 ou 2, **caractérisé en ce que** le dispositif de séparation comporte un filtre (22), qui est placé sur le dessous de la vis sans fin (14) et est plat ou courbe.

4. Dispositif selon la revendication 1 ou 2, **caractérisé en ce que** le dispositif de séparation comporte un filtre (22c, 22d) entourant circulairement la vis sans fin (14).

5. Dispositif selon l'une des revendications 1 à 4, **caractérisé en ce que** le fond (24) du carter (16) de la vis sans fin comporte en direction de la pompe à vis excentrique (10) une pente à l'extrémité de laquelle est placé la sortie d'écoulement de filtrat (26).

6. Dispositif selon l'une des revendications 1 à 5, **caractérisé en ce que** le dispositif d'amenée (30, 32) comporte un mélangeur rotatif à ailettes.

7. Dispositif selon l'une des revendications 1 à 6, **caractérisé en ce que** le dispositif de séparation est associé à un dispositif de rinçage, qui dirige le liquide de rinçage sur le côté sortie du dispositif de séparation.

8. Dispositif selon les revendications 4 et 7, **caractérisé en ce que** le filtre de section circulaire (22d) est entraîné en rotation et une rampe de rinçage (38) comportant au moins un ajutage est placée parallèlement à l'axe de l'arbre.

9. Dispositif selon la revendication 8, **caractérisé en ce qu'**une rampe de rinçage (34) comportant au moins un ajutage est montée mobile et entraînée par un entraînement de rinçage pour rincer en permanence ou par intermittence la surface du filtre.

10. Dispositif selon la revendication 9, **caractérisé en ce que** le mouvement de la rampe de rinçage (34) est accouplé à la rotation de la vis sans fin (14).

11. Dispositif selon l'une des revendications 8 à 10, **caractérisé en ce qu'**il est prévu pour la rampe de rinçage un dispositif de commande, qui commande le mouvement et/ou la distribution de liquide de rinçage, par exemple en fonction du temps.

12. Dispositif selon la revendication 2, **caractérisé en ce que** le dispositif de paliers (54) pour l'arbre d'entraînement (18) comporte un canal, qui relie une conduite d'amenée pour un mélange de boue claire et de floculants à l'extrémité adjacente de la vis sans fin (14).
